# EUROPEAN PATENT APPLICATION

(11) **EP 4 113 398 A2**
(43) Date of publication of application: **04.01.2023**
(21) Application number: 22202349.1
(22) Date of filing: 19.10.2022
(51) Int. Cl.: G06N 20/00, G06K 9/62

(54) **DATA LABELING PROCESSING METHOD AND APPARATUS, ELECTRONIC DEVICE AND MEDIUM**

(30) Priority: 25.10.2021 CN 202111241609
(71) Applicant: Beijing Baidu Netcom Science Technology Co., Ltd., Beijing 100085 (CN)
(72) Inventor: ZHANG, Yaping, Beijing, 100085 (CN); GAO, Haoran, Beijing, 100085 (CN)
(74) Representative: Isarpatent

(57) **Abstract**

The present disclosure provides a data labeling processing method and apparatus, an electronic device and a medium, and relates to the field of artificial intelligence, in particular to deep learning and recommendation technologies. An implementation is: determining an item feature of an item to be labeled and a resource feature of a labeling end to be matched; determining a co-occurrence feature for the item to be labeled and the labeling end to be matched; obtaining a classification result based on the item feature, the resource feature and the co-occurrence feature, the classification result indicating whether the labeling end to be matched is matched with the item to be labeled; and sending the item to be labeled to the labeling end to be matched based on the classification result.

## Description

### TECHNICAL FIELD

The present disclosure relates to the field of artificial intelligence, in particular to deep learning and recommendation technologies, and more specifically to a data labeling processing method and apparatus, an electronic device, a computer-readable storage medium and a computer program product.

### BACKGROUND

Artificial intelligence is a discipline aimed at studying to enable a computer to simulate a certain thought process and intelligent behavior (such as learning, reasoning, thinking, planning, etc.) of people, which involves both a technology in a hardware level and a technology in software level. An artificial intelligence hardware technology generally includes technologies such as a sensor, a dedicated artificial intelligence chip, cloud computing, distributed storage and big data processing. An artificial intelligence software technology mainly includes a computer vision technology, a speech recognition technology, a natural language processing technology and machine learning/deep learning, a big data processing technology, a knowledge mapping technology, etc.

Massive, high-quality, and refined data can improve the effect of artificial intelligence models. Currently, high-quality datasets depend on human-labeled results.

The methods described in this section are not necessarily methods that have been previously conceived of or employed. Unless otherwise stated, it should not be assumed that any of the methods described in this section are considered as prior art since they are included in this section. Similarly, unless otherwise stated, the problem mentioned in this section should not be considered as universally recognized in any prior art.

### SUMMARY

The present disclosure provides a data labeling processing method and apparatus, an electronic device, a computer-readable storage medium and a computer program product.

According to an aspect of the present disclosure, a data labeling processing method is provided, including: determining an item feature of an item to be labeled and a resource feature of a labeling end to be matched; determining a co-occurrence feature for the item to be labeled and the labeling end to be matched; obtaining a classification result based on the item feature, the resource feature and the co-occurrence feature, the classification result indicating whether the labeling end to be matched is matched with the item to be labeled; and sending the item to be labeled to the labeling end to be matched based on the classification result.

According to another aspect of the present disclosure, a method for training a data labeling processing model is provided, including: determining an item feature of a sample item and a resource feature of a sample labeling end; determining a co-occurrence feature for the sample item and the sample labeling end; obtaining a predicted classification result based on the item feature, the resource feature and the co-occurrence feature, the predicted classification result indicating whether the sample labeling end is matched with the sample item; determining an actual classification result for the sample item and the sample labeling end based on a predetermined matching rule; and adjusting a parameter of the data labeling processing model based on the predicted classification result and the actual classification result.

According to another aspect of the present disclosure, a data labeling processing apparatus is provided, including: an item resource feature obtaining unit, configured to determine an item feature of an item to be labeled and a resource feature of a labeling end to be matched; a co-occurrence feature obtaining unit, configured to determine a co-occurrence feature for the item to be labeled and the labeling end to be matched; a classification unit, configured to obtain a classification result based on the item feature, the resource feature and the co-occurrence feature, the classification result indicating whether the labeling end to be matched is matched with the item to be labeled; and a sending unit, configured to send the item to be labeled to the labeling end to be matched based on the classification result.

According to another aspect of the present disclosure, an apparatus for training a data labeling processing model is provided, including: an item resource feature obtaining unit, configured to determine an item feature of a sample item and a resource feature of a sample labeling end; a co-occurrence feature obtaining unit, configured to determine a co-occurrence feature for the sample item and the sample labeling end; a classification unit, configured to obtain a predicted classification result based on the item feature, the resource feature and the co-occurrence feature, the predicted classification result indicating whether the sample labeling end is matched with the sample item; a calibration unit, configured to determine an actual classification result for the sample item and the sample labeling end based on a predetermined matching rule; and a parameter adjusting unit, configured to adjust a parameter of the data labeling processing model based on the predicted classification result and the actual classification result.

According to another aspect of the present disclosure, an electronic device is provided which includes: at least one processor; and a memory in communication connection with the at least one processor. The memory stores instructions executable by the at least one processor which, when executed by the at least one processor, cause the at least one processor to perform the above method.

According to another aspect of the present disclosure, a non-transitory computer-readable storage medium storing computer instructions is provided. The computer instructions are executed to cause a computer to perform the above method.

According to another aspect of the present disclosure, a computer program product is provided which includes a computer program which, when executed by a processor, implements the above method.

According to one or more embodiments of the present disclosure, a matching result of a labeling end that can complete the item to be labeled may be provided for that item in a machine learning based manner. Data features of multiple different dimensions can be considered in the recommendation process, thus improving an accuracy of the recommendation result and further improving data set labeling quality of data labeled items.

It should be appreciated that what is described in this section is not intended to indicate key or important features of the embodiments of the present disclosure, nor is it intended to limit the scope of the present disclosure. Other features of the present disclosure will become apparent from the following description.

### BRIEF DESCRIPTION OF THE DRAWINGS

The drawings exemplarily illustrate embodiments and form a part of the specification. Together with the textual description of the specification, the drawings serve to explain the example implementations of the embodiments. The embodiments shown are merely for illustrative purposes rather than limiting the scope of the claims. Throughout the drawings, the same reference numerals refer to similar but not necessarily identical elements.
Fig. 1 illustrates a schematic diagram of an example system in which various methods described herein may be implemented according to embodiments of the present disclosure;
Fig. 2 illustrates an exemplary flow chart of a data labeling processing method according to an embodiment of the present disclosure;
Fig. 3 illustrates an exemplary architecture diagram of a data labeling processing model according to an embodiment of the present disclosure;
Fig. 4 illustrates an exemplary flow chart of a method for training a data labeling processing model according to an embodiment of the present disclosure;
Fig. 5 illustrates an exemplary architecture of a data labeling recommendation system according to an embodiment of the present disclosure;
Fig. 6 illustrates an exemplary process of a data labeling recommendation process according to an embodiment of the present disclosure;
Fig. 7 illustrates an exemplary block diagram of a data labeling processing apparatus according to an embodiment of the present disclosure;
Fig. 8 illustrates an exemplary block diagram of an apparatus for training a data labeling processing model according to an embodiment of the present disclosure; and
Fig. 9 illustrates a structural block diagram of an exemplary electronic device capable of implementing embodiments of the present disclosure.

### DETAILED DESCRIPTION

The exemplary embodiments of the present disclosure are described below with reference to the accompanying drawings, which include various details of the embodiments of the present disclosure for better understanding and should be regarded as examples only. Therefore, those ordinarily skilled in the art should recognize that various changes and modifications can be made to the embodiments described herein without departing from the scope of the present disclosure. Similarly, description for known functions and structures is omitted from the following description for clarity and conciseness.

In the present disclosure, unless otherwise stated, the terms "first", "second", etc., used to describe various elements are not intended to limit the positional relationship, timing relationship or importance relationship of these elements. These terms are only used to distinguish one component from another. In some examples, a first element and a second element may refer to the same instance of the element. In some cases, the first element and the second element may refer to different instances based on the contextual description.

The terms used in the description of the various embodiments of the present disclosure are for the purpose of describing specific examples and are not intended to limit the present disclosure. Unless otherwise clearly indicated in the context, if the number of elements is not specifically limited, there may be one or more elements. Moreover, the term "and/or" used in the present disclosure is intended to cover any and all possible combinations of the listed items.

The embodiments of the present disclosure will be described in detail below with reference to the accompanying drawings.

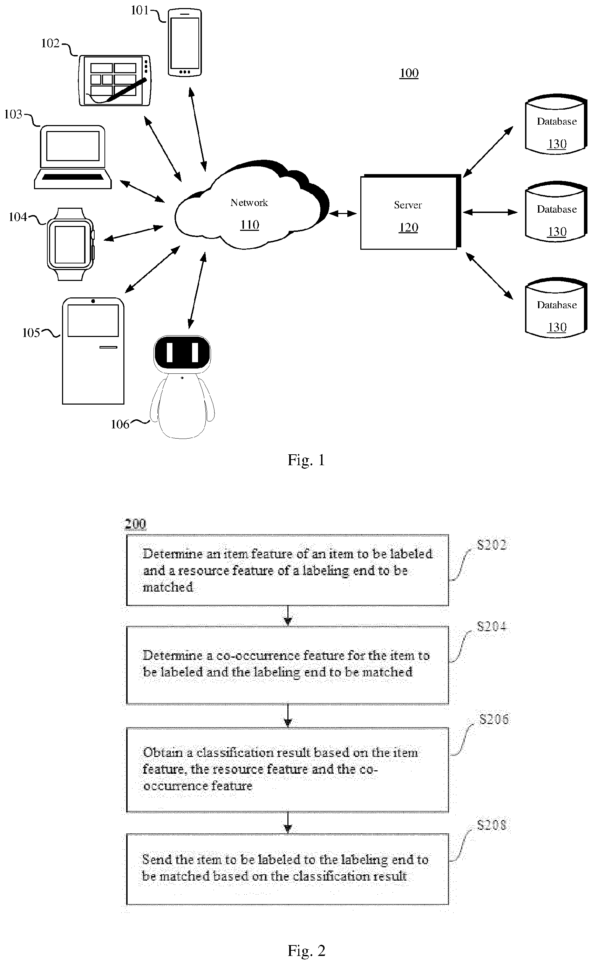

Fig. 1 illustrates a schematic diagram of an example system 100 in which various methods and apparatuses described herein may be implemented according to embodiments of the present disclosure. Referring to Fig. 1, the system 100 includes one or more client devices 101, 102, 103, 104, 105 and 106, a server 120, and one or more communication networks 110 coupling the one or more client devices to the server 120. The client devices 101, 102, 103, 104, 105 and 106 may be configured to execute one or more applications.

In the embodiments of the present disclosure, the server 120 may run one or more services or software applications that are capable of performing the method according to the present disclosure.

In some embodiments, the server 120 may also provide other services or software applications that may include non-virtual and virtual environment. In some embodiments, these services may be provided as web-based or cloud services, such as under a Software as a Service (SaaS) model to the users of the client devices 101, 102, 103, 104, 105 and/or 106.

In the configuration depicted in Fig. 1, the server 120 may include one or more components that implement functions performed by the server 120. These components may include software components that may be executed by one or more processors, hardware components or a combination thereof. Users operating the client devices 101, 102, 103, 104, 105 and/or 106 may in turn utilize one or more client applications to interact with the server 120 to utilize services provided by these components. It should be appreciated that various different system configurations are possible, which may be different from the system 100. Therefore, Fig. 1 is an example of a systems for implementing various methods described herein and is not intended to be limiting.

Users may use the client devices 101, 102, 103, 104, 105 and/or 106 to obtain the item information of the item to be labeled and/or the resource information of the labeling end to be matched. The client devices may provide interfaces that enable the users of the client devices to interact with the client devices. The client devices may also output information to the user via the interfaces. Although Fig. 1 depicts only six types of client devices, it should be appreciated for those skilled in the art that any number of client devices may be supported according to the present disclosure.

The client devices 101, 102, 103, 104, 105 and/or 106 may include various types of computer devices such as portable handheld devices, general purpose computers such as personal computers and laptops, workstation computers, wearable devices, smart screen devices, self-service terminal devices, service robots, gaming systems, thin clients, various messaging devices, sensors or other sensing devices, and the like. These computing devices may run various types and versions of software applications and operating systems such as Microsoft Windows, Apple iOS, UNIX-like operating systems, Linux or Linux-like operating systems such as Google Chrome OS; or include various mobile operating systems such as Microsoft Windows Mobile OS, iOS, Windows Phone, Android. Portable handheld devices may include cellular phones, smartphones, tablets, personal digital assistants (PDAs), and the like. Wearable devices may include head mounted display such as smart glasses, and other devices. Gaming systems may include various handheld gaming devices, Internet-enabled gaming devices, and the like. The client devices may be capable of executing various different applications such as various Internet-related apps, communication applications such as E-mail applications, short message service (SMS) applications and may use various communication protocols.

The networks 110 may be any type of network familiar to those skilled in the art that may support data communications using any of a variety of available protocols including, but not limited to, TCP/IP, SNA, IPX, and the like. Merely by way of example, the one or more networks 110 can be a local area network (LAN), networks based on Ethernet, Token-Ring, a wide-area network (WAN), the Internet, a virtual network, a virtual private network (VPN), an intranet, an extranet, a public switched telephone network (PSTN), an infra-red network, a wireless network such as blue tooth, WIFI, and/or any combination of these and/or other networks.

The server 120 may include one or more general purpose computers, application specific server computers such as PC (personal computer) servers, UNIX servers, and midrange servers, blade servers, mainframe computers, server clusters, or any other appropriate arrangement and/or combination. The server 120 may include one or more virtual machines running virtual operating systems, or other computing architectures involving virtualization such as one or more flexible pools of logical storage devices that may be virtualized to maintain virtual storage devices for the server. In various embodiments, the server 120 may run one or more services or software applications that provide the functions described below.

A computing unit in the server 120 may run one or more operating systems including any of the operating systems described above, as well as any commercially available server operating systems. The server 120 may also run any of a variety of additional server applications and/or middle-tier applications, including HTTP servers, FTP servers, CGI servers, JAVA servers, database servers, and the like.

In some implementations, the server 120 may include one or more applications to analyze and consolidate data feeds and/or event updates received from users of the client devices 101, 102, 103, 104, 105, and 106. The server 120 may also include one or more applications to display the data feeds and/or real-time events via one or more display devices of the client devices 101, 102, 103, 104, 105, and 106.

In some implementations, the server 120 may be a server of a distributed system, or a server combined with a blockchain. The server 120 may also be a cloud server, or an intelligent cloud computing server or an intelligent cloud host with artificial intelligence technology. The cloud server is a host product in a cloud computing service system to overcome the defects of high management difficulty and weak business expansibility for a traditional physical host and virtual private server (VPS) services.

The system 100 may also include one or more databases 130. In some embodiments, these databases may be used to store data and other information. For example, one or more of the databases 130 may be used to store information such as audio files and video files. The databases 130 may reside in a variety of locations. For example, a database used by the server 120 may be local to the server 120 or may be remote from the server 120 and in communication with the server 120 via a network-based or a dedicated connection. The databases 130 may be of different types. In some embodiments, the database used by the server 120 may be, for example, a relational database. One or more of these databases may be adapted to enable storage, update, and retrieval of data to and from the databases in response to commands.

In some embodiments, one or more of the databases 130 may also be used by an application to store application data. The databases used by the application may be of different types such as a key-value storage repository, an object storage repository, or a general storage repository supported by a file system.

The system 100 in Fig. 1 may be configured and operated in various ways to enable various methods and apparatuses according to the present disclosure.

In the related art, in order to improve the effect of the artificial intelligence model, it is necessary to perform refined data labeling for different items. Existing resource recommendation strategies for labeled items are mainly based on process rule filtering designed by experience. When an item to be labeled arrives, valid labeling ends that meet security level requirements are first filtered out. Next, considering a main label of the item to be labeled and a labeling end ability label calculated based on historical data, labeling ends are ranked in combination with a matching degree of a corresponding ability label and historical accuracy rate and top-ranked labeling ends are selected for recommendation. In some cases, the ability of the labeling end can be checked according to examination requirements for the item to be labeled.

The recommendation result rule of the labeling end generated by the above method in the related art is singular. Only the ability label matching degree between the item and the labeling end is considered, but effective feature information of other dimensions is ignored. As a result, it is difficult to further improve the recommendation effect. In many cases, it is necessary to determine that the labeling end is capable of completing the corresponding to be labeled item by the examination qualification process of the item to be labeled. With the above recommendation method based on historical data, the recommendation result will be biased towards the labeling end with more historical records, making it difficult for newly added labeling ends to cold start, and difficult to explore long-tail potential of the labeling ends.

In traditional recommendation scenarios, when a page containing specific content viewed by the user is recorded, it can be considered that the user is interested in the corresponding specific content, so that pages containing the specific content can be recommended to the user later. However, unlike traditional recommendation scenarios, for data labeling tasks, the fact that a labeling end has undertaken a specific labeling task does not necessarily mean that the labeling end is capable of completing the specific labeling task. Therefore, the traditional recommendation algorithm model cannot be directly applied to a recommendation task for matching a data labeling end.

In order to solve the above problems, the present disclosure provides a new data labeling processing method. Embodiments of the present disclosure will be described below in combination with the accompanying drawings.

Fig. 2 shows an exemplary flow chart of a data labeling processing method according to an embodiment of the present disclosure. The clients 101-106 or the server 120 shown in Fig. 1 may be used to perform the method 200 shown in Fig. 2.

As shown in Fig. 2, in step S202, an item feature of an item to be labeled and a resource feature of a labeling end to be matched may be determined. In step S204, a co-occurrence feature for the item to be labeled and the labeling end to be matched may be determined. In step S206, a classification result may be obtained based on the item feature, the resource feature and the co-occurrence feature, with the classification result indicating whether the labeling end to be matched is matched with the item to be labeled. In step S208, the item to be labeled may be sent to the labeling end to be matched based on the classification result.

With the above method provided by the embodiment of the present disclosure, the classification result that indicates whether the labeling end to be matched is matched with the item to be labeled may be determined based on respective feature information of the item to be labeled and the labeling end to be matched as well as co-occurrence information between the item and the labeling end, so that the feature information of multiple dimensions is used for selecting an appropriate labeling end, thus further improving the accuracy rate of data labeling.

The method provided by the embodiment of the present disclosure will be described in detail below.

In step S202, the item feature of the item to be labeled and the resource feature of the labeling end to be matched may be determined.

In some embodiments, the item feature of the item to be labeled may include at least one of an item label, an item type, item difficulty, and an item template feature. Item information related to the item to be labeled may be obtained in advance through manners such as questionnaire survey, and the item feature of the item to be labeled is determined based on the item information. The labeling end to be matched may correspond to a data labeling team that can perform data labeling tasks. The resource feature of the labeling end may indicate a labeling ability of the corresponding data labeling team. The resource feature may include at least one of an item historical statistics feature (such as historical accuracy) of the labeling end to be matched and an item completion status (such as a historical completion rate) of the labeling end to be matched. Resource information of the labeling end to be matched may be obtained in advance using manners of historical records or questionnaire survey, and the resource feature of the labeling end to be matched is determined based on the resource information.

In step S204, the co-occurrence feature for the item to be labeled and the labeling end to be matched may be determined.

The co-occurrence feature may indicate a situation which simultaneously exists at the item to be labeled and the labeling end to be matched. That is, the co-occurrence feature may indicate whether the labeling end to be matched has processed the item to be labeled or a labeled item similar to the item to be labeled before. When the item to be labeled belongs to existing labeled items and the labeling end to be matched belongs to existing labeling ends, the co-occurrence feature may indicate whether the labeling end to be matched has processed the item to be labeled before. When the item to be labeled does not belong to the existing labeled items, the co-occurrence feature may indicate whether the labeling end to be matched has processed an existing labeled item before that belongs to the same item category as the item to be labeled. When the labeling end to be matched does not belong to the existing labeling ends, the co-occurrence feature may indicate whether an existing labeling end of the same category has processed the item to be labeled or an existing labeled item that belongs to the same item category as the item to be labeled.

In some embodiments, the co-occurrence feature for the item to be labeled and the labeling end to be matched may be determined based on a co-occurrence matrix. The co-occurrence matrix indicates a historical matching condition of at least one existing labeled item and at least one existing labeling end.

Taking M existing labeled items and N existing labeling ends (M and N are positive integers) as an example, the co-occurrence matrix of the existing labeled items and the existing labeling ends may be determined. A size of the co-occurrence matrix may be determined to be M^{∗}N. In some implementations, each row of the co-occurrence matrix may correspond to one existing labeled item, and each column may correspond to an existing labeling end. The value of each element (i.e. an intersection point of each row and each column) in the co-occurrence matrix indicates whether the existing labeled item corresponding to that element has used the existing labeling end corresponding to that element. In some examples, if the existing labeled item corresponding to that element has used the existing labeling end corresponding to that element, the value of the element may be set to be 1, otherwise it may be set to be 0. It is appreciated that, values of each element in the co-occurrence matrix may be set to be any other possible values. A specific manner for setting the value of each element of the co-occurrence matrix is not limited here.

The co-occurrence matrix may be decomposed to obtain a matrix decomposition result of the co-occurrence matrix. The matrix decomposition result includes feature vectors respectively used for each existing labeled item and each existing labeling end. Matrix decomposition may be performed in any matrix decomposition manner, such as triangular decomposition, full rank decomposition, QR decomposition, Jordan decomposition, and singular value decomposition (SVD). For a co-occurrence matrix with the size of M^{∗}N, the matrix decomposition result will include M+N feature vectors, where each feature vector may correspond to one existing labeled item or one existing labeling end.

The feature vector for the item to be labeled and the feature vector for the labeling end to be matched may be determined based on the above matrix decomposition result, and the feature vector of the item to be labeled and the feature vector of the labeling end to be matched may be combined as the co-occurrence feature.

In some embodiments, the feature vector of the item to be labeled may be determined based on one of: determining the feature vector of the item to be labeled from the matrix decomposition result; or determining an item category to which the item to be labeled belongs based on a category feature of the item to be labeled, and determining an average value of feature vectors of at least one existing labeled item in the item category to which the item to be labeled belongs as the feature vector of the item to be labeled.

In some implementations, when the item to be labeled belongs to the existing labeled items, the feature vector of the item to be labeled may be determined directly from the matrix decomposition result. In some cases, in order to obtain more features of items of the same category as the item to be labeled, direct use of the matrix decomposition result may be avoided. Instead, the item category to which the item to be labeled belongs is determined based on the category feature of the item to be labeled, and the average value of the feature vectors of the at least one existing labeled item in the item category to which the item to be labeled belongs is determined as the feature vector of the item to be labeled.

In some other implementations, when the item to be labeled does not belong to the existing labeled items, the feature vector of the item to be labeled cannot be determined directly through the matrix decomposition result. Therefore, the item category to which the item to be labeled belongs may be determined based on the category feature of the item to be labeled, and the average value of the feature vectors of the at least one existing labeled item in the item category to which the item to be labeled belongs is determined as the feature vector of the item to be labeled.

In some examples, the category feature of the item to be labeled may include at least one of the item label, the item type, the item difficulty, and the average accuracy of the item to be labeled. Information on the category feature of the item to be labeled may be obtained in advance through a manner of questionnaire survey.

In some embodiments, the feature vector of the labeling end to be matched may be determined based on one of: determining the feature vector of the labeling end to be matched from the matrix decomposition result; or determining a labeling end category to which the labeling end to be matched belongs based on a category feature of the labeling end to be matched, and determining an average value of feature vectors of at least one existing labeling end in the labeling end category to which the labeling end to be matched belongs as the feature vector of the labeling end to be matched.

In some implementations, when the labeling end to be matched belongs to the existing labeling ends, the feature vector of the labeling end to be matched may be determined directly from the matrix decomposition result. In some cases, in order to obtain more features of labeling ends of the same category as the labeling end to be matched, direct use of the matrix decomposition result may be avoided. Instead, the labeling end category to which the labeling end to be matched belongs is determined based on the category feature of the labeling end to be matched, and the average value of the feature vectors of the at least one existing labeling end in the labeling end category to which the labeling end to be matched belongs is determined as the feature vector of the labeling end to be matched.

In some other implementations, when the labeling end to be matched does not belong to the existing labeling ends, the feature vector of the labeling end to be matched cannot be determined directly through the matrix decomposition result. Therefore, the labeling end category to which the labeling end to be matched belongs may be determined based on the category feature of the labeling end to be matched, and the average value of the feature vectors of the at least one existing labeling end in the labeling end category to which the labeling end to be matched belongs is determined as the feature vector of the labeling end to be matched.

In some examples, the category feature of the labeling end to be matched may include at least one of a number of people, a historically participated item label, historical working hours, and historical accuracy rate of the labeling end to be matched. Information on the category feature of the labeling end to be matched may be obtained in advance through a manner of questionnaire survey or reading historical records.

The problem of difficulty in cold start of the newly added labeling ends may be solved using the above manner of generating the co-occurrence feature. It is appreciated that, a newly added labeling end lacks historical records of tasks they have processed, so it is difficult to match the feature of the new labeling end with the labeled item based on a preset rule. However, by determining the labeling end category to which the new labeling end belongs and using the average value of the feature vectors of the labeling ends of the same category as the feature vector of the new labeling end, the problem of difficulty in cold start of the new labeling end when it is just added can be effectively solved, thus improving the accuracy of assignment of labeling tasks, and further improving the accuracy rate of data labeling.

In step S206, the classification result may be obtained based on the item feature, the resource feature and the co-occurrence feature, with the classification result indicating whether the labeling end to be matched is matched with the item to be labeled.

In some embodiments, a classification may be performed on a combination of the item feature and resource feature determined in step S202 and the co-occurrence feature determined in step S204.

In some implementations, enhanced features of the item feature and the resource feature may be determined. For example, the item feature and the resource feature may be processed with a gradient boosted decision tree classifier to obtain the enhanced features for the item feature and the resource feature. In some examples, the item feature and the resource feature may be processed respectively with the gradient boosted decision tree classifier to obtain an enhanced item feature and an enhanced resource feature, and a combination of the enhanced item feature and the enhanced resource feature may be determined as the enhanced features for the item feature and the resource feature. In other examples, the combination of the item feature and the resource feature may be processed with the gradient boosted decision tree classifier to obtain the enhanced features for the item feature and the resource feature. In some other examples, the item feature and the resource feature may also be processed with any other models (such as a deep network) that can realize feature enhancement to obtain the enhanced features for the item feature and the resource feature.

The enhanced features for the item feature and the resource feature and the co-occurrence feature determined in step S204 may be combined to obtain classification features for the item to be labeled and the labeling end to be matched. Classifications may be performed on the classification features to obtain the classification result.

In some implementations, the classification features may be processed with a logic regression model to obtain a matching score for the labeling end to be matched and the item to be labeled. The classification result may be determined based on the matching score output by the logic regression model. It is appreciated that, any other classifier may also be used to classify the classification feature without departing from principles of the present disclosure.

In some examples, whether the labeling end to be matched can process the item to be labeled may be determined based on whether the matching score is higher than a preset matching threshold. In some other examples, the item to be labeled and a plurality of candidate labeling ends to be matched may be processed using the method shown in Fig. 2. The plurality of candidate labeling ends to be matched may be ranked based on the matching scores, and one or more labeling ends to be matched that are the most matching are selected to process the item to be labeled based on the ranking result.

In step S208, the item to be labeled may be sent to the labeling end to be matched based on the classification result. When the classification result indicates that the labeling end to be matched can process the item to be labeled, the item to be labeled may be sent to the labeling end to be matched. The labeling team corresponding to the labeling end to be matched may further process a data labeling task for the item to be labeled. When the classification result indicates that the labeling end to be matched cannot process the item to be labeled, another candidate labeling end to be matched may be selected for matching and recommendation.

The labeling end recommendation result for the item to be labeled may be obtained with the process shown in Fig. 2. For most labeling end recommendation tasks, recommendation results may be obtained with the process shown in Fig. 2.

However, in order to explore long-tail potential of the candidate labeling end, a part of recommendation tasks may be selected, and for the selected recommendation tasks, the item feature of the item to be labeled and the resource feature of at least one candidate labeling end may be processed based on a multi-armed bandits model, so as to determine at least one alternative labeling end matched with the item to be labeled from the at least one candidate labeling end. A result indicating the alternative labeling end output by the multi-armed bandits model may be used to replace the classification result obtained in step S206.

With the above method, the problem that the recommendation result tends to indicate labeling ends with more historical records can be further solved.

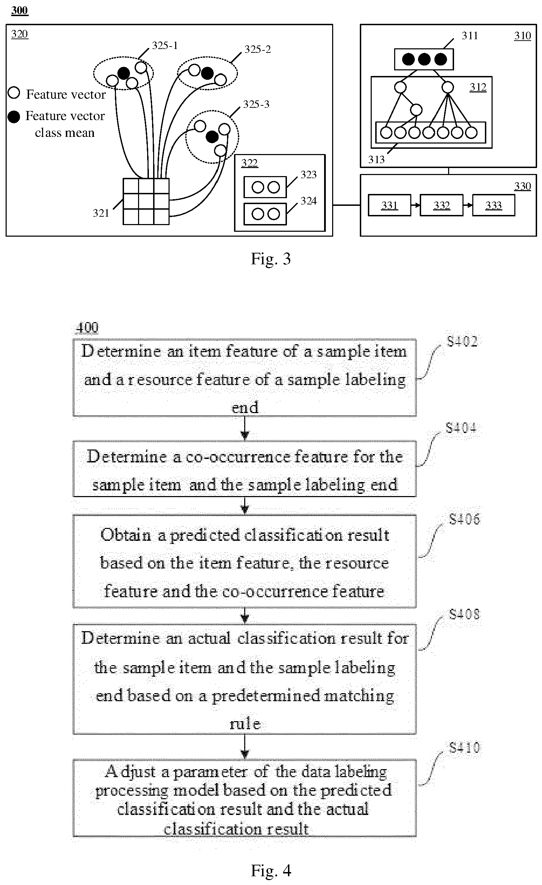

Fig. 3 shows an exemplary architecture diagram of a data labeling processing model according to an embodiment of the present disclosure. The model 300 shown in Fig. 3 may be used to implement steps S202-S206 in the data labeling processing method described in combination with Fig. 2.

As shown in Fig. 3, the data labeling processing model 300 may include an enhanced feature obtaining unit 310, a co-occurrence feature obtaining unit 320 and a classification unit 330.

The enhanced feature obtaining unit 310 may be implemented by the gradient boosted decision tree classifier. As shown in Fig.3, a combination of at least one of the item features and at least one of the resource features may be used as input 311 of the gradient boosted decision tree classifier 312, and the output of the gradient boosted decision tree classifier may be used as the enhanced feature 313 of the item feature and the resource feature.

The co-occurrence feature obtaining unit 320 may be configured to obtain the co-occurrence feature 322 for the item to be labeled and the labeling end to be matched.

The feature vector 323 of the item to be labeled and the feature vector 324 of the labeling end to be matched may be determined based on the matrix decomposition result of the co-occurrence matrix 321, and the co-occurrence feature of the item to be labeled and the labeling end to be matched may be determined by combining the feature vector of the item to be labeled and the feature vector of the labeling end to be matched.

In some embodiments, for the item to be labeled belonging to the existing labeled items and the labeling end to be matched belonging to the existing labeling ends, the feature vector of the item to be labeled and the feature vector of the labeling end to be matched may be obtained directly based on the matrix decomposition result of the co-occurrence matrix 321.

In some other embodiments, the feature vector of the item to be labeled and the feature vector of the labeling end to be matched may also be determined based on an item clustering result and a labeling end clustering result.

Fig. 3 shows an entity category 325-1, an entity category 325-2 and an entity category 325-3 obtained based on entity clustering (an entity herein may be a labeled item or a labeling end). Each entity category includes at least one existing feature vector corresponding to an existing entity obtained through matrix decomposition of the co-occurrence matrix. Further, a feature vector class mean for the entity category may be calculated based on existing feature vectors in that entity category. The feature vector class mean of the entity category may be determined as the feature vector of the entity (either a new entity or an existing entity) that belongs to the entity category.

The classification unit 330 may be configured to obtain a classification result. As shown in Fig. 3, the classification unit 330 may be implemented by the logic regression model 332. The enhanced feature 313 output by the enhanced feature obtaining unit 310 and the co-occurrence feature 322 output by the co-occurrence feature obtaining unit 320 may be combined to determine the classification feature 331 for the classification process as the input of the logic regression model 332. The classification result 333 output by the logic regression model may be used to determine whether the labeling end to be matched is matched with the item to be labeled.

Fig. 4 shows an exemplary flow chart of a method for training a data labeling processing model according to an embodiment of the present disclosure.

As shown in Fig. 4, in step S402, an item feature of a sample item and a resource feature of a sample labeling end may be determined.

In step S404, a co-occurrence feature for the sample item and the sample labeling end may be determined.

In step S406, a predicted classification result may be obtained based on the item feature, the resource feature and the co-occurrence feature, with the predicted classification result indicating whether the sample labeling end is matched with the sample item.

In some embodiments, the sample item may be used as an item to be labeled and the sample labeling end may be used as a labeling end to be matched. Steps S402-S406 may be performed in a same way as steps S202-S206 in the method described in combination with Fig. 2 without repeated description.

In step S408, an actual classification result may be determined based on a predetermined matching rule.

In some embodiments, the sample labeling end may be assessed using a designed assessment principle or the sample labeling end may be scored based on a completion state of historical tasks of the sample labeling end. Then it is determined based on the score whether the sample labeling end is matched with the actual classification result of the sample item.

In step S410, a parameter of the data labeling processing model may be adjusted based on the predicted classification result and the actual classification result.

The parameter of the matching model, for example, parameters for the gradient boosted decision tree classifier and the logic regression model, may be adjusted based on a difference between the predicted classification result and the actual classification result using any appropriate loss function and model training method.

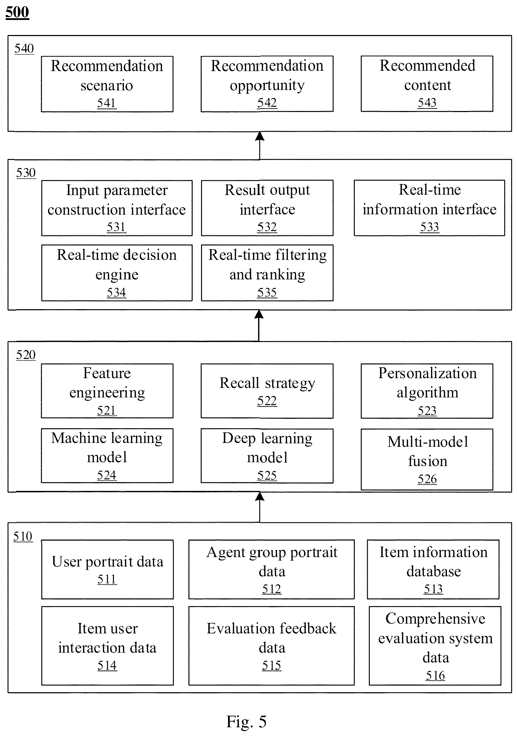

Fig. 5 shows an exemplary architecture of a data labeling recommendation system according to an embodiment of the present disclosure.

As shown in Fig. 5, the data labeling recommendation system 500 may include a data layer 510, an algorithm layer 520, an interface layer 530 and an application layer 540.

As shown in Fig. 5, the data layer 510 may include various required data for implementing data labeling recommendation. For example, the data layer 510 may include user portrait data 511, agent group portrait data 512, an item information database 513, item user interaction data 514, evaluation feedback data 515, comprehensive evaluation system data 516, etc.

The algorithm layer 520 may include various required algorithm models for implementing data labeling recommendation. For example, the algorithm layer 520 may include feature engineering 521, a recall strategy 522, a personalization algorithm 523, a machine learning model 524, a deep learning model 525, a multi-model fusion algorithm 526, etc.

The interface layer 530 may include various required logical interfaces for implementing data labeling recommendation. For example, the interface layer 530 may include an input parameter construction interface 531, a result output interface 532, a real-time information interface 533, a real-time decision engine 534, real-time filtering and ranking 535, etc.

The application layer 540 may include various required applications for implementing data labeling recommendation. For example, the application layer 540 may include a recommendation scenario 541, recommendation opportunity 542, recommended content 543, etc. Using feedback information that a recommendation result may be obtained in the application layer, data and algorithms involved in the recommendation process may be further optimized.

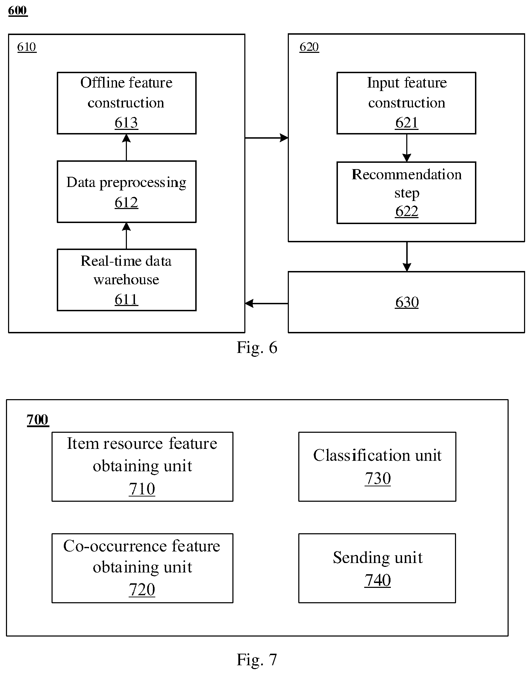

Fig. 6 shows an exemplary process of a data labeling recommendation process according to an embodiment of the present disclosure.

As shown in Fig. 6, the data labeling recommendation process 600 may include a data processing process 610, a recommendation process 620, an online labeling service 630, etc. The data labeling recommendation process 600 may be continuously and repeatedly performed with the data processing process 610, the recommendation process 620 and the online labeling service 630 in a cycle.

In the data processing process 610, a data feature may be constructed using information in a real-time data warehouse 611. The information in the real-time data warehouse 611 may include information of a labeling end, information of a labeled item, interaction data between the labeling end and the item, etc. Data cleaning, data conversion, data extract, data segmentation and other operations may be performed on the information in the real-time data warehouse 611 by a data preprocessing step 612, such that data in a format that facilitates subsequent data processing can be obtained. Further, the data processing process 610 may further include a step 613 of offline feature construction. A numerical feature, a category feature, and an implicit vector feature in the data may be extracted, and the data may be pre-trained in any possible manner, so as to obtain various model algorithms for the data labeling recommendation process suitable for the current scenario.

In the recommendation process 620, the item to be labeled and at least one candidate labeling end to be matched may be recommended. As shown in Fig. 6, the recommendation process 620 may include a step 621 of input feature construction. In the step 621 of input feature construction, the item feature for characterizing the item to be labeled and the resource feature for characterizing the labeling end to be matched may be constructed. Further, the recommendation process 620 may further include a recommendation step 622. In the recommendation step 622, the input feature may be processed based on a recall model, a ranking model, a cold start strategy, an exploration and utilization strategy and other algorithms. With the embodiment provided by the present disclosure, the recall model and the ranking model in the recommendation step may be implemented with a gradient boosted decision tree classifier and a logic regression model, an average value of feature vectors of an entity category may be used to represent a co-occurrence feature of a new entity so as to implement the cold start strategy, and a multi-arm bandits algorithm may be used to implement the exploration and utilization strategy.

A recommendation result of the data labeling recommendation process may be obtained based on a result output by the recommendation step 622. Further, based on the recommendation result, the models and algorithms used in the recommendation step 622 may also be trained and evaluated, such that the recommendation accuracy rate of the models and algorithms used in the recommendation step is improved using massive data.

In the online labeling service 630, context information related to the labeled item and the labeling end may be obtained, an online interface of the recommendation process may be provided for a user, and online feedback information of the user on the recommendation result may be obtained.

Fig. 7 shows an exemplary block diagram of a data labeling processing apparatus according to an embodiment of the present disclosure.

As shown in Fig. 7, the data labeling processing apparatus 700 may include an item resource feature obtaining unit 710, a co-occurrence feature obtaining unit 720, a classification unit 730 and a sending unit 740.

The item resource feature obtaining unit 710 may be configured to determine an item feature of an item to be labeled and a resource feature of a labeling end to be matched. The co-occurrence feature obtaining unit 720 may be configured to determine a co-occurrence feature for the item to be labeled and the labeling end to be matched. The classification unit 730 may be configured to obtain a classification result based on the item feature, the resource feature and the co-occurrence feature, with the classification result indicating whether the labeling end to be matched is matched with the item to be labeled. The sending unit 740 may be configured to send the item to be labeled to the labeling end to be matched based on the classification result.

Operations of the above units 710-740 of the data labeling processing apparatus 700 described here are similar to operations of steps S202-S208 described above, which are not repeated here.

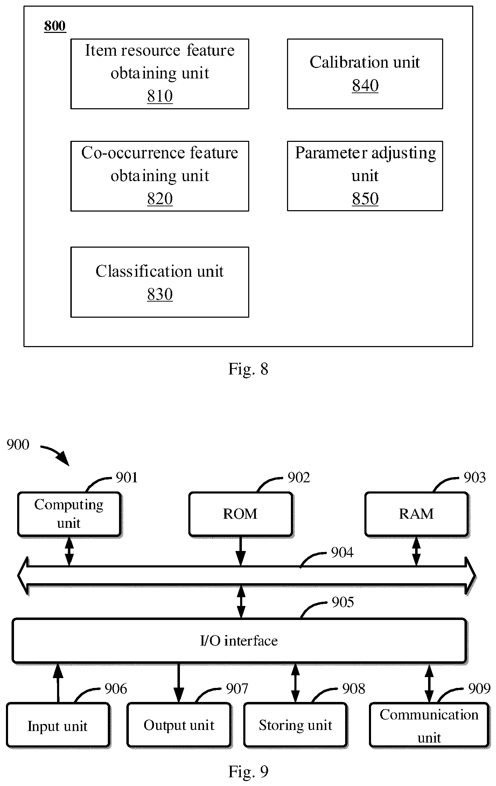

Fig. 8 shows an exemplary block diagram of an apparatus for training a data labeling processing model according to an embodiment of the present disclosure.

As shown in Fig. 8, the apparatus 800 for training the data labeling processing model may include an item resource feature obtaining unit 810, a co-occurrence feature obtaining unit 820, a classification unit 830, a calibration unit 840, and a parameter adjusting unit 850.

The item resource feature obtaining unit 810 may be configured to determine an item feature of a sample item and a resource feature of a sample labeling end. The co-occurrence feature obtaining unit 820 may be configured to determine a co-occurrence feature for the sample item and the sample labeling end. The classification unit 830 may be configured to obtain a predicted classification result based on the item feature, the resource feature and the co-occurrence feature, wherein the predicted classification result indicates whether the sample labeling end is matched with the sample item. The calibration unit 840 may be configured to determine an actual classification result based on a predetermined matching rule. The parameter adjusting unit 850 may be configured to adjust a parameter of the data labeling processing model based on the predicted classification result and the actual classification result.

Operations of the above units 810-830 of the apparatus 800 for training the data labeling processing model described here are similar to operations of steps S402-S410 described above, which are not repeated here.

According to an embodiment of the present disclosure, an electronic device is further provided which includes: at least one processor; and a memory in communication connection with the at least one processor. The memory stores instructions executable by the at least one processor which, when executed by the at least one processor, cause the at least one processor to perform the method according to Fig. 2 and Fig. 4.

According to an embodiment of the present disclosure, a non-transitory computer-readable storage medium storing computer instructions is further provided. The computer instructions are executed to cause a computer to perform the method according to Fig. 2 and Fig. 4.

According to an embodiment of the present disclosure, a computer program product is further provided, which includes a computer program which, when executed by a processor, implements the method according to Fig. 2 and Fig. 4

In the technical solution of the present disclosure, the collection, storage, use, processing, transmission, provision and disclosure of a user's personal information involved are all in line with the provisions of relevant laws and regulations, and do not violate public order and good customs.

Referring to Fig. 9, a structural block diagram of an electronic device 900 that may serve as a server or a client of the present disclosure will now be described, which is an example of hardware devices that may be applied to various aspects of the present disclosure. The electronic device is intended to represent various forms of digital electronic computer devices, such as laptop computers, desktop computers, workstations, personal digital assistants, servers, blade servers, mainframe computers, and other suitable computers. The electronic device may also represent various forms of mobile devices, such as personal digital processors, cellular phones, smart phones, wearable devices, and other similar computing devices. The components shown herein, their connections and relationships, and their functions serve as examples only, and are not intended to limit implementations of the disclosure described and/or claimed herein.

As shown in Fig. 9, the electronic device 900 includes a computing unit 901 which may perform various appropriate actions and processing according to a computer program stored in a read-only memory (ROM) 902 or a computer program loaded into a random access memory (RAM) 903 from a storage unit 908. In the RAM 903, various programs and data for operations of the electronic device 900 may also be stored. The computing unit 901, the ROM 902 and the RAM 903 are connected with each other through a bus 904. An input/output (I/O) interface 905 is also connected to the bus 904.

A plurality of components in the electronic device 900 are connected to the I/O interface 905, including: an input unit 906, an output unit 907, the storage unit 908 and a communication unit 909. The input unit 906 may be any type of device capable of inputting information to the electronic device 900. The input unit 906 may receive input numerical or character information and generate key signal input related to a user setting and/or function control of the electronic device, and may include but is not limited to a mouse, a keyboard, a touch screen, a trackpad, a trackball, a joystick, a microphone and/or a remote-control unit. The output unit 907 may be any type of device capable of presenting information and may include but is not limited to a display, a speaker, a video/audio output terminal, a vibrator and/or a printer. The storage unit 908 may include but is not limited to a magnetic disk and a compact disc. The communication unit 909 allows the electronic device 900 to exchange information/data with other devices through a computer network such as the Internet, and/or various telecommunication networks, and may include but is not limited to a modem, a network card, an infrared communication device, a wireless communication transceiver and/or a chipset such as a Bluetooth TM device, a 1302.11 device, a WiFi device, a WiMax device, a cellular communication device and/or the like.

The computing unit 901 may be various general-purpose and/or application specific processing components with processing and computing capabilities. Some examples of the computing unit 901 include but are not limited to a central processing unit (CPU), a graphics processing unit (GPU), various application specific artificial intelligence (AI) computing chips, various computing units that run a machine learning model algorithm, a digital signal processor (DSP), and any appropriate processor, controller, microcontroller, and the like. The computing unit 801 performs various methods and processing described above, for example, the methods 200, 400. For example, in some embodiments, the methods 200, 400 may be implemented as a computer software program tangibly embodied on a machine readable medium, such as the storage unit 908. In some embodiments, part or all of the computer programs may be loaded and/or installed onto the electronic device 900 via the ROM 902 and/or the communication unit 909. When the computer program is loaded to the RAM 903 and executed by the computing unit 901, one or more steps of the methods 200, 400 described above can be performed. Alternatively, in other embodiments, the computing unit 901 may be configured to perform the methods 200, 400 in any other appropriate ways (for example, by means of firmware).

Various implementations of the systems and technologies described herein may be implemented in a digital electronic circuit system, an integrated circuit system, a field programmable gate array (FPGA), an application specific integrated circuit (ASIC), an application specific standard part (ASSP), a system on chip (SOC), a complex programmable logic device (CPLD), computer hardware, firmware, software and/or combinations thereof. These various implementations may include: being implemented in one or more computer programs which may be executed and/or interpreted on a programmable system including at least one programmable processor, wherein the programmable processor may be an application specific or general-purpose programmable processor and may receive data and instructions from a storage system, at least one input apparatus and at least one output apparatus, and transmit the data and the instructions to the storage system, the at least one input apparatus and the at least one output apparatus.

Program codes for implementing the methods of the present disclosure may be written in any combination of one or more programming languages. The program codes may be provided to processors or controllers of a general-purpose computer, an application specific computer or other programmable data processing apparatuses, such that the program codes, when executed by the processors or controllers, cause implementation of the functions/operations specified in the flow diagrams and/or block diagrams. The program codes may be executed entirely on a machine, partially on the machine, partially on the machine and partially on a remote machine as a stand-alone software package, or entirely on the remote machine or server.

In the context of the present disclosure, a machine readable medium may be a tangible medium that may include or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination thereof. More specific examples of the machine readable storage medium include electrical connections based on one or more wires, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination thereof.

In order to provide interactions with the users, the systems and techniques described herein may be implemented on a computer including: a display apparatus for displaying information to the users such as a CRT (cathode ray tube) or LCD (liquid crystal display) monitor; and a keyboard and a pointing device such as a mouse or trackball, through which the users may provide input to the computer. Other types of apparatuses may also be used to provide interactions with the users; for example, feedback provided to the users may be any form of sensory feedback such as visual feedback, auditory feedback, or tactile feedback; and an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which the user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally remote from each other and usually interact through a communication network. The relationship between the client and the server is generated by computer programs running on the respective computers and with a client-server relationship to each other. The server may be a cloud server, or a server of a distributed system, or a server combined with a blockchain.

It should be appreciated that various flows described above may be used, with steps reordered, added, or removed. For example, the steps described in the present disclosure may be executed in parallel, in sequence or in different orders, which is not limited herein if a desired result of the technical solutions of the present disclosure can be achieved.

Although the embodiments or examples of the present disclosure have been described with reference to the drawings, it should be appreciated that the methods, systems, and devices described above are merely example embodiments or examples, and the scope of the present invention is not limited by the embodiments or examples, but only defined by the granted claims and equivalent scopes thereof. Various elements in the embodiments or examples may be omitted or replaced with equivalent elements thereof. Moreover, various steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A data labeling processing method, comprising:
determining (S202) a first item feature of an item to be labeled and a first resource feature of a labeling end to be matched;
determining (S204) a first co-occurrence feature for the item to be labeled and the labeling end to be matched;
obtaining (S206) a classification result based on the first item feature, the first resource feature and the first co-occurrence feature, the classification result indicating whether the labeling end to be matched is matched with the item to be labeled; and
sending (S208) the item to be labeled to the labeling end to be matched based on the classification result.

2. The method according to claim 1, wherein obtaining the classification result based on the first item feature, the first resource feature and the first co-occurrence feature comprises:
determining a first enhanced feature of the first item feature and the first resource feature;
combining the first enhanced feature and the first co-occurrence feature to obtain a first classification feature for the item to be labeled and the labeling end to be matched; and
classifying the classification feature to obtain the classification result, and optionally,
wherein determining the first enhanced feature of the first item feature and the first resource feature comprises:
processing the first item feature and the first resource feature with a gradient boosted decision tree classifier to obtain the first enhanced feature, and optionally,
wherein classifying the first classification feature to obtain the classification result comprises:
processing the first classification feature with a logic regression model to obtain a matching score between the labeling end to be matched and the item to be labeled; and
determining the classification result based on the matching score.

3. The method according to claim 1 or 2, wherein determining the first co-occurrence feature for the item to be labeled and the labeling end to be matched comprises:
determining a co-occurrence matrix for existing labeled items and existing labeling ends, wherein a value of each element in the co-occurrence matrix indicates whether an existing labeled item corresponding to the element has used an existing labeling end corresponding to the element;
determining a matrix decomposition result of the co-occurrence matrix, wherein the matrix decomposition result comprises feature vectors respectively used for each existing labeled item and each existing labeling end;
determining a feature vector for the item to be labeled based on the matrix decomposition result;
determining a feature vector for the labeling end to be matched based on the matrix decomposition result; and
combining the feature vector of the item to be labeled and the feature vector of the labeling end to be matched as the first co-occurrence feature.

4. The method according to claim 3, wherein determining the feature vector for the item to be labeled based on the matrix decomposition result comprises:
determining the feature vector of the item to be labeled from the matrix decomposition result; or
determining an item category to which the item to be labeled belongs based on a category feature of the item to be labeled, and determining an average value of a feature vector of at least one existing labeled item in the item category to which the item to be labeled belongs as the feature vector of the item to be labeled, and optionally,
wherein the category feature of the item to be labeled comprises at least one of an item label, an item type, an item difficulty, and an average accuracy of the item to be labeled.

5. The method according to claim 3, wherein determining the feature vector for the labeling end to be matched based on the matrix decomposition result comprises:
determining the feature vector of the labeling end to be matched from the matrix decomposition result; or
determining a labeling end category to which the labeling end to be matched belongs based on a category feature of the labeling end to be matched, and determining an average value of a feature vector of at least one existing labeling end in the labeling end category to which the labeling end to be matched belongs as the feature vector of the labeling end to be matched, and optionally,
wherein the category feature of the labeling end to be matched comprises at least one of a historically participated item label, a historical labeling duration, and a historical accuracy of the labeling end to be matched.

6. The method according to claim 1, wherein the first item feature comprises at least one of an item label, an item type, an item difficulty, and an item template feature, and
wherein the first resource feature comprises at least one of an item historical statistics feature of the labeling end to be matched and an item completion condition of the labeling end to be matched, and
wherein the method further comprises: processing the item feature of the item to be labeled and a first resource feature of at least one candidate labeling end based on a multi-armed bandits model to determine at least one alternative labeling end matched with the item to be labeled from the at least one candidate labeling end.

7. The method according to claim 1, further comprising training a data labeling processing model, wherein training the data labeling processing model comprises:
determining (S402) a second item feature of a sample item and a second resource feature of a sample labeling end;
determining (S404) a second co-occurrence feature for the sample item and the sample labeling end;
obtaining (S406) a predicted classification result based on the second item feature, the second resource feature and the second co-occurrence feature, the predicted classification result indicating whether the sample labeling end is matched with the sample item;
determining (S408) an actual classification result for the sample item and the sample labeling end based on a predetermined matching rule; and
adjusting (S410) a parameter of the data labeling processing model based on the predicted classification result and the actual classification result.

8. The method according to claim 7, wherein obtaining the predicted classification result based on the second item feature, the second resource feature and the second co-occurrence feature comprises:
determining a second enhanced feature of the second item feature and the second resource feature;
combining the second enhanced feature and the second co-occurrence feature to obtain a second classification feature for the sample item and the sample labeling end; and
classifying the second classification feature to obtain the predicted classification result, and optionally,
wherein determining the second enhanced feature of the second item feature and the second resource feature comprises:
processing the second item feature and the second resource feature with a gradient boosted decision tree classifier to obtain the second enhanced feature, and optionally,
wherein classifying the second classification feature to obtain the predicted classification result comprises:
processing the second classification feature with a logic regression model to obtain a matching score between the sample labeling end and the sample item; and
determining the predicted classification result based on the matching score.

9. The method according to claim 7 or 8, wherein determining the second co-occurrence feature for the sample item and the sample labeling end comprises:
determining a co-occurrence matrix for existing labeled items and existing labeling ends, wherein a value of each element in the co-occurrence matrix indicates whether an existing labeled item corresponding to the element has used an existing labeling end corresponding to the element;
determining a matrix decomposition result of the co-occurrence matrix, wherein the matrix decomposition result comprises feature vectors respectively used for each existing labeled item and each existing labeling end;
determining a feature vector for the sample item based on the matrix decomposition result;
determining a feature vector for the sample labeling end based on the matrix decomposition result; and
combining the feature vector of the sample item and the feature vector of the sample labeling end as the second co-occurrence feature.

10. The method according to claim 9, wherein determining the feature vector for the sample item based on the matrix decomposition result comprises:
determining the feature vector of the sample item from the matrix decomposition result; or
determining an item category to which the sample item belongs based on a category feature of the sample item, and determining an average value of a feature vector of at least one existing labeled item in the item category to which the sample item belongs as the feature vector of the sample item, and optionally,
wherein the category feature of the sample item comprises at least one of an item label, an item type, an item difficulty, and an average accuracy of the sample item.

11. The method according to claim 9, wherein determining the feature vector for the sample labeling end based on the matrix decomposition result comprises:
determining the feature vector of the sample labeling end from the matrix decomposition result; or
determining a labeling end category to which the sample labeling end belongs based on a category feature of the sample labeling end, and determining an average value of a feature vector of at least one existing labeling end in the labeling end category to which the sample labeling end belongs as the feature vector of the sample labeling end, and optionally,
wherein the category feature of the sample labeling end comprises at least one of a historically participated item label, a historical labeling duration, and a historical accuracy of the sample labeling end.

12. The method according to claim 7, wherein the second item feature comprises at least one of an item label, an item type, an item difficulty, and an item template feature, and
wherein the second resource feature comprises at least one of an item historical statistics feature of the sample labeling end and an item completion condition of the sample labeling end.

13. A data labeling processing apparatus, comprising:
an item resource feature obtaining unit (710), configured to determine an item feature of an item to be labeled and a resource feature of a labeling end to be matched;
a co-occurrence feature obtaining unit (720), configured to determine a co-occurrence feature for the item to be labeled and the labeling end to be matched;
a classification unit (730), configured to obtain a classification result based on the item feature, the resource feature and the co-occurrence feature, the classification result indicating whether the labeling end to be matched is matched with the item to be labeled; and
a sending unit (740), configured to send the item to be labeled to the labeling end to be matched based on the classification result.

14. A non-transitory computer-readable storage medium storing computer instructions, wherein the computer instructions are executed to cause a computer to perform the method according to any of claims 1-12.

15. A computer program product comprising a computer program, wherein the computer program, when executed by a processor, implements the method according to any of claims 1-12.
